**Europäisches Patentamt**

**European Patent Office**

**Office européen des brevets**

(19)

(11) Veröffentlichungsnummer : **0 157 856**
**B1**

(12) **EUROPÄISCHE PATENTSCHRIFT**

(45) Veröffentlichungstag der Patentschrift :
**13.04.88**

(51) Int. Cl.⁴ : **B 29 C 45/00**

(21) Anmeldenummer : **84903708.0**

(22) Anmeldetag : **28.09.84**

(86) Internationale Anmeldenummer :
**PCT/AT 84/00032**

(87) Internationale Veröffentlichungsnummer :
**WO/8501469 (11.04.85 Gazette 85/09)**

(54) **VERFAHREN ZUM HERSTELLEN VON KUNSTSTOFFTEILEN.**

(30) Priorität : **28.09.83 AT 3451/83**

(43) Veröffentlichungstag der Anmeldung :
**16.10.85 Patentblatt 85/42**

(45) Bekanntmachung des Hinweises auf die Patenterteilung : **13.04.88 Patentblatt 88/15**

(84) Benannte Vertragsstaaten :
**AT BE CH DE FR GB LI LU NL SE**

(56) Entgegenhaltungen :
**WO-A-82 /040 09**
**DE-A- 3 138 242**
**FR-A- 2 185 493**
**US-A- 2 361 900**

(73) Patentinhaber : **Cincinnati Milacron Austria Aktiengesellschaft**
**Laxenburgerstrasse 246**
**A-1232 Wien (AT)**

**NPO 'PLASTIK'**
**Bereshkovskaja Nebereshnaja 20**
**121059 Moskau (SU)**

(72) Erfinder : **ABRAMOV, Vsevolod, Wassiljewitsch**
**Poklonnaya Str. 6, Tür 4**
**121170 Moskau (SU)**
Erfinder : **MAKAROV, Vladimir, Leonidowitsch**
**Akademik Anokhin Str. 38, Block 3, Tür 423**
**117602 Moskau (SU)**
Erfinder : **KUSNEZOV, Vsevolod, Viktoriewitsch**
**Maris Ulyanova Str. 9, Block 2, Tür 6**
**117331 Moskau (SU)**
Erfinder : **LOGINOV, Vladimir, Wassiljewitsch**
**Kooperative Str. 31, Tür 1**
**Balashikha 8 143900 Moskau (SU)**
Erfinder : **POLOWINKINA, Tatjana, Petrowna**
**Tchertanoskaya Str. 34, Block 1, Tür 69**
**Moskau (SU)**
Erfinder : **SULZBACHER, Konrad**
**Mondweg 31/11/5**
**A-1140 Wien (AT)**
Erfinder : **PLEYER, Robert**
**Anton Baumgartnerstr. 44/A1/062**
**A-1230 Wien (AT)**

EP 0 157 856 B1

Erfinder : **KRIEGLER, Friedrich**
**Schubertgasse 4-6/5A**
**A-1090 Wien (AT)**
Erfinder : **SCHEIBLBRANDNER, Ulrich**
**Neulerchenfelderstr. 55/I/11**
**A-1160 Wien (AT)**
Erfinder : **STOKHAMMER, Peter**
**Parhamerplatz 11/13**
**A-1170 Wien (AT)**

(74) Vertreter : **Gibler, Ferdinand, Dipl.Ing.Dr.tech.**
**Dorotheergasse 7/14**
**A-1010 Wien (AT)**

2

## Beschreibung

Die Erfindung bezieht sich auf ein Verfahren zum Herstellen von Kunststoffteilen, insbesondere aus teilkristallinen Kunststoffmassen, durch Einspritzen einer schmelzflüssigen Kunststoffmasse unter Druck über einen Anguß in einen Hohlraum und Erstarrenlassen des Spritzlings und Entfernen aus dem Hohlraum, wobei die Temperatur der schmelzflüssigen Kunststoffmasse zum Zeitpunkt der Einspritzung maximal 50° über Schmelzpunkt der Kunststoffmasse bzw. deren Temperatur bei Schmelzbeginn liegt und zu Beginn des Einspritzens ein Einspritzdruck von 1.400 bis 2.000 bar angewandt wird.

Ein solches Verfahren wurde z.B. durch die DE-A-3138 242 vorgeschlagen. Bei diesem bekannten Verfahren wird ein Einspritzdruck von 900 bis 3.000 bar eingehalten und die formgebenden Flächen der Form werden auf eine Temperatur von —20 °C abgekühlt, um ein rasches Erstarren des Spritzlings zu erreichen.

Bei einer solchen Verfahrensführung kommt es zwar zu einer gewissen Erhöhung der Festigkeit des Spritzlings, doch ist diese nicht in allen Fällen ausreichend. Außerdem läßt sich dieses Verfahren, wenn mit Einspritzdrücken von ca. 3.000 bar gearbeitet wird, meist nur auf Spezialmaschinen durchführen.

Weiters wurde auch schon vorgeschlagen, mit extrem hohen Einspritzdrücken, z.B. 6.000 bar, zu arbeiten, wobei der Einspritzdruck nach der vollständigen Füllung des Formenhohlraumes nur sehr kurz aufrecht erhalten wird und nach dem Wegnehmen des Einspritzdruckes, was entweder durch Abschalten des von der Spritzmaschine gelieferten Druckes oder durch das Zuführen des Angusses erfolgen kann, der Spritzling rasch entformt wird. Damit gelingt es zwar, Werkstücke mit orientierten Strukturen der Kristalle herzustellen, doch sind dazu spezielle und sehr aufwendige Maschinen notwendig.

Ziel der Erfindung ist es, diese Nachteile zu vermeiden und ein Verfahren der eingangs erwähnten Art vorzuschlagen, das es ermöglicht, Werkstücke mit hochorientierter Kristallstrucktur herzustellen, ohne daß dabei mit extrem hohen Einspritzdrücken gearbeitet werden müßte.

Erfindungsgemäß wird dies dadurch erreicht, daß unmittelbar nach dem vollständigen Füllen des Hohlraumes, bei noch nicht erstarrtem Spritzling, ein hoher Forminnendruck aufgebracht wird, der 600 bis 1.000 bar, vorzugsweise 700 bis 900 bar beträgt, der vorzugsweise nach dem Anguß gemessen wird, und daß der Anguß durchlässig gehalten und der Einspritzdruck solange aufrecht erhalten wird, bis der Forminnendruck aufgrund der Erstarrung des Spritzlings auf 1 bis 50 bar, vorzugsweise auf 1 bis 10 var abgesunken ist.

Durch die Kombination dieser Merkmale mit dem angegebenen Einspritzdruck und der niedrigen Einspritztemperatur ergibt sich eine sehr hochorientierte Kristallstruktur, wozu der hohe Forminnendruck und die Entformung des Spritzlings erst nach dessen praktisch vollständiger Erstarrung beitragen.

Das für die Führung des Verfahrens nach der Erfindung notwendige Offenhalten des Angusses der Form kann entweder durch die Ausbildung des Angusses als Heißkanal, also mit einer entsprechenden Heizung, oder als Kaltkanal ohne eine solche erreicht werden, wobei in letzterem Fall durch konstruktive Maßnahmen dafür gesorgt werden muß, daß der Anguß erst nach einer praktisch vollständigen Erstarrung des Spritzlings zufriert. Dies setzt jedoch eine entsprechend große Dimensionierung des Angüsses voraus.

Versuche haben gezeigt, daß erfindungsgemäß hergestellte Spritzlinge gegenüber aus dem gleichen Material nach dem bisher üblichen Verfahren unter Verwendung der üblichen Spritzdrücke von ca. 1.000 bis 1.500 bar eine um das 1,5 bis 3-fach höher Festigkeit aufweisen.

Im Hinblick auf eine rasche Herstellung der Spritzlinge ist es zweckmäßig die Wände des Hohlraumes intensiv zu kühlen. Zu diesem Zweck kann vorgesehen sein den Formenhohlraum wärmeisoliert anzuordnen, um dessen Wände besser kühlen zu können und eine Behinderung der Kühlung durch das große Speichervermögen durch die Formplatte zu vermeiden.

Um die Überlegenheit des erfindungsgemäßen Verfahrens zu zeigen wurden Vergleichsversuche durchgeführt. Dazu wurden auf einer Spritzgießmaschine CM 335-1350 der Firma Cincinnati Österreich mit einem Einspritz volumen von 996 cm$^3$ mit den gleichen Werkzeugen Schaufelräder nach dem erfindungemäßen Verfahren und nach dem Stand der Technik hergestellt und die Bruchspannungsfestigkeit ermittelt.

Die Nachdruckzeit wurde nach dem erfindungegemäßen Verfahren mit dem vollen Druckabfall im Formenhohlraum bestimmt.

Dabei wurden die Versuche mit verschiedenen Materialien durchgeführt. Die Ergebnisse sind in dem folgenden Tabellen zusammengefaßt.

Material : Niederdruckpolyäthylen mit einer Schmelzbeginntemperatur von 129 °C ; maximale Schmelze-Temperatur nach der Erfindung war 179 °C.

| Einspritzdruck | Schmelze Temperatur (°C) | Festigkeit (N/cm²) |
|---|---|---|
| 1400 bar | 150 | 520 |
| | 165 | 430 |
| | 180 | 380 |
| 1700 bar | 150 | 600 |
| | 165 | 510 |
| | 180 | 460 |
| 2000 bar | 150 | 750 |
| | 165 | 570 |
| | 180 | 500 |
| 1200 bar[x] | 220 | 250 |

Material : Polypropylen mit einer Schmelzbeginntemperatur von 166 °C max. Schmelze-Temperatur nach der Erfindung 215 °C.

| Einspritzdruck | Schmelze Temperatur (°C) | Festigkeit (N/cm |
|---|---|---|
| 1400 bar | 180 | 580 |
| | 190 | 520 |
| | 200 | 480 |
| 1700 bar | 180 | 600 |
| | 190 | 570 |
| | 200 | 510 |
| 2000 bar | 180 | 640 |
| | 190 | 590 |
| | 200 | 540 |
| 1200 bar[x] | 240 | 320 |
| 1400 bar[x] | 240 | 350 |

Material : Polyamid 12 mit einer Schmelzbeginntemperatur von 175 °C max. Schmelze-Temperatur nach der Erfindung 225 °C.

| Einspritzdruck | Schmelze Temperatur (°C) | Festigkeit (N/cm²) |
|---|---|---|
| 1400 bar | 180 | 690 |
| | 190 | 630 |
| | 200 | 520 |
| 1700 bar | 180 | 720 |
| | 190 | 660 |
| | 200 | 550 |
| 2000 bar | 180 | 770 |
| | 190 | 710 |
| | 200 | 600 |
| 1200 bar^x | 230 | 430 |
| 1400 bar^x | 230 | 450 |

Material : Formaldehydkopolymer mit einer Schmelzbeginntemperatur von 155 °C, max. Schmelze-Temperatur nach der Erfindung 205 °C.

| Einspritzdruck | Schmelze Temperatur (°C) | Festigkeit (N/cm²) |
|---|---|---|
| 1400 bar | 180 | 790 |
| | 190 | 770 |
| | 200 | 710 |
| 1700 bar | 180 | 830 |
| | 190 | 800 |
| | 200 | 740 |
| 2000 bar | 180 | 860 |
| | 190 | 820 |
| | 200 | 760 |
| 1200 bar^x | 220 | 650 |

Die mit x gekennzeichneten Versuche wurden mit außerhalb des erfindungsgemäßen Bereiches liegenden Parametern durchgeführt.

Aus diesen Tabellen ist deutlich ersichtlich, daß die Festigkeit wesentlich abnimmt, wenn eine zu hohe Temperatur der Schmelze beim Einspritzen gewählt wird und zwar, wie die Beispiele mit Polypropylen und Polyamid 12 zeigen, auch dann wenn ein im erfindungsgemäß festgelegten Bereich liegender Einspritzdruck angewandt wird.

**Patentanspruch**

Verfahren zum Herstellen von Kunststoffteilen, insbesondere aus teilkristallinen Kunststoffmassen durch Einspritzen einer schmelzflüssigen Kunststoffmasse, unter Druck über einen Anguß in einen Hohlraum und Erstarrenlassen des Spritzlings und Entfernen aus dem Hohlraum, wobei die Temperatur der schmelzflüssigen Kunststoffmasse zum Zeitpunkt der Einspritzung maximal 50° über dem Schmelzpunkt der Kunststoffmasse bzw. deren Temperatur bei Schmelzbeginn liegt und zu Beginn des Einspritzens ein Einspritzdruck von 1.400 bis 2.000 bar angewandt wird, dadurch gekennzeichnet, daß unmittelbar nach dem vollständigen Füllen des Hohlraumes, bei noch nicht erstarrtem Spritzling, ein hoher Forminnendruck aufgebracht wird, der 600 bis 1.000 bar, vorzugsweise 700 bis 900 bar beträgt, der vorzugsweise nach dem Anguß gemessen wird, und daß der Anguß durchlässig gehalten und der Einspritzdruck solange aufrecht erhalten wird, bis der Forminnendruck aufgrund der Erstarrung des Spritzlings auf 1 bis 50 bar, vorzugsweise auf 1 bis 10 abgesunken ist.

**Claim**

Process for the manufacture of plastics articles, especially from partially crystalline plastics masses by injecting a molten plastics mass under pressure via a sprue into a cavity, allowing the moulding to solidify and removing it from the cavity, the temperature of the molten plastics mass at the time of injection being at most 50° above the melting point of the plastics mass or the temperature at which it starts to melt, and the injection pressure used at the start of injection being from 1.400 to 2.000 bar, characterized in that immediately after the cavity has been completely filled, and while the moulding has not yet solidified, a high internal mould pressure is applied, amounting to from 600 to 1.000 bar, preferably from 700 to 900 bar, preferably measured downstream from the sprue, and that the sprue is kept permeable and the injection pressure is maintained until the internal mould pressure has fallen to from 1 to 50 bar, preferably from 1 to 10 bar, due to the solidification of the moulding.

**Revendication**

Procédé de réalisation de pièces en matière plastique, notamment à partir de masses semi-cristallines de matière plastique, par injection sous pression d'une masse fondue de matière plastique dans une cavité en passant par un canal d'injection par solidification de la pièce obtenue par injection et extraction de ladite pièce hors de la cavité, la température de la masse fondue de matière plastique au moment de l'injection se trouvant au maximum à 50° au-dessus du point de fusion de cette masse de matière plastique ou de la température qu'elle a en début de fusion et la pression d'injection au début de l'injection étant de 1.400 à 2.000 bars, caractérisé en ce que, immédiatement après le remplissage total de la cavité et alors que la pièce obtenue par l'injection n'est pas encore solidifiée, on applique une pression intérieure de moule très élevée de 600 à 1.000 bars, de préférence de 700 à 900 bars, que l'on mesure, de préférence, après le canal d'injection, et en ce que l'on conserve libre le passage dans le canal d'injection, en maintenant la pression d'injection jusqu'à ce que, du fait de la solidification de la pièce obtenue par injection, la pression intérieure du moule ait chuté jusqu'à 1 à 50 bars, de préférence jusqu'à 1 à 10 bars.